# FASCICULE DE BREVET EUROPEEN

(11) **EP 2 142 851 B1**
(45) Date de publication et mention de la délivrance du brevet: **13.01.2016**
(21) Numéro de dépôt: 08805545.4
(22) Date de dépôt: 07.05.2008
(51) Int. Cl.: F21V 23/04, H05B 37/02

(54) **DISPOSITIF D'ÉCLAIRAGE À COMMANDE AUTOMATIQUE, ET INSTALLATION COMPORTANT UNE PLURALITÉ DE CES DISPOSITIFS**
AUTOMATISCH GESTEUERTE BELEUCHTUNGSVORRICHTUNG UND ANLAGE MIT MEHREREN SOLCHEN VORRICHTUNGEN
AUTOMATICALLY CONTROLLED LIGHTING DEVICE AND INSTALLATION COMPRISING A PLURALITY OF SUCH DEVICES

(30) Priorité: 10.05.2007 FR 0703331
(43) Date de publication de la demande: 13.01.2010
(73) Titulaire: Parrot, 75010 Paris (FR)
(72) Inventeur: SEYDOUX, Henri, F-75017 Paris (FR)
(74) Mandataire: Dupuis-Latour, Dominique
(86) Numéro de dépôt international: PCT/FR2008/000639
(87) Numéro de publication internationale: WO 2008/152234

(56) Documents cités:
- EP-A- 1 558 054
- WO-A-2007/015009
- DE-U1- 29 822 394
- DE-U1-202006 007 896
- US-A- 5 895 985
- US-A1- 2002 180 367
- US-A1- 2005 185 398

## Description

L'invention concerne les systèmes d'éclairage "intelligents", c'est-à-dire ceux pourvus de commandes totalement ou partiellement automatiques d'allumage et/ou d'extinction d'une source lumineuse, essentiellement dans le but d'économiser l'énergie.

On connaît ainsi des systèmes équipés d'un détecteur de présence (capteur infrarouge ou détecteur volumétrique) permettant d'allumer une lampe à l'approche d'un individu, avec une extinction automatique temporisée.

On connaît également divers dispositifs équipés d'un émetteur radio ou infrarouge permettant de commander à volonté et à distance des systèmes d'éclairage en fonction des besoins.

Ainsi, le DE 20 2006 007 896 U1 décrit un dispositif d'éclairage comprenant une pluralité de sources lumineuses pourvues chacune d'un système de commande propre, et couplées entre elles par un chaînage radio. Grâce à ce couplage, l'allumage de l'une des sources déclenche automatiquement celui des autres sources par transmission, de proche en proche, d'un signal radio approprié. Le système peut être également télécommandé par réception d'un ordre externe émis par un terminal de type PDA ou analogue. Le but recherché par ce système est de permettre un allumage simultané et synchrone de plusieurs sources lumineuses. On notera en outre qu'il réagit de façon indifférenciée par rapport aux individus qui l'utilisent.

Le US 2005/0185398 A1, quant à lui, décrit un dispositif d'éclairage muni, entre autres, de moyens permettant d'identifier un individu. Cette identification est opérée par réception d'un *"data packet"* envoyé par l'individu depuis un *"Personnal Communicator Transmitter"* tel qu'un téléphone mobile, un PDA, une clef à télécommande, etc. À réception de ce *"data packet"*, le dispositif active un ou plusieurs modules de commande de divers appareils domestiques tels que lampes, climatiseur, convoyeur de dossiers, etc. Le but recherché par ce système est d'adapter l'environnement domotique (éclairage, climatisation, environnement de travail, etc.) au profil particulier de la personne qui active la commande envoyée au dispositif, de manière à ajuster cet environnement à ses préférences personnelles, préalablement programmées puis envoyées par le *"data packet"*.

Ces dispositifs sont, certes, efficaces, mais relativement simplistes dans leur mode de fonctionnement, surtout en ce qui concerne la commande d'extinction automatique : le plus souvent, il s'agit d'une temporisation pure et simple, réglée de façon empirique pour assurer un compromis approximatif entre réaction rapide et risques d'extinctions et réallumages intempestifs.

Ces dispositifs sont, au surplus, généralement adaptés à la commande d'une unique lampe, ou d'un unique groupe de lampes, mais ne sont pas adaptés à des configurations plus complexes avec plusieurs zones d'éclairage distinctes, que l'on souhaiterait commander de façon différenciée en fonction des circonstances.

L'invention a ainsi pour objet un système d'éclairage comportant des moyens automatiques d'allumage/extinction permettant de pallier les inconvénients et les limitations des systèmes actuels.

Le but premier de l'invention est de proposer un système comportant des moyens d'extinction "intelligents" propres à économiser l'énergie sans risque de fonctionnement intempestif. L'invention a notamment pour objet un système permettant d'analyser l'activité des individus dans l'environnement immédiat de la lampe ou des lampes afin d'en déclencher l'extinction de façon pertinente, éventuellement de certaines des lampes seulement dans le cas d'une installation de grande étendue : par exemple, sur des plateaux de bureau, le système de l'invention permettra l'extinction automatique dans certaines zones seulement, tout en maintenant l'éclairage dans d'autres zones où des individus sont encore présents et actifs. L'invention a également pour but de proposer un tel système comportant des moyens d'allumage automatique assurant une très grande commodité d'utilisation, ainsi qu'une possibilité de commande discriminée en fonction de certains utilisateurs préalablement identifiés.

Le dispositif d'éclairage de l'invention est du type générique divulgué par le DE 20 2006 007 896 U1 précité, comprenant les éléments énoncés dans le préambule de la revendication 1.

Le concept de base de l'invention consiste à commander automatiquement l'extinction de la source lumineuse par la seule détection de la disparition d'un objet dans l'environnement de la source lumineuse, détection opérée de manière passive par simple "écoute" de l'environnement radioélectrique de la source lumineuse.

Plus précisément, les moyens de commande comprennent les éléments énoncés dans la partie caractérisante de la revendication 1. Les sous-revendications visent diverses formes de réalisation particulières, avantageuses.

L'invention a également pour objet une installation d'éclairage comprenant une pluralité de dispositifs d'éclairage tels qu'exposés plus haut.

Dans cette installation, chaque dispositif comprend des moyens émetteurs et récepteurs radio aptes à recherche et établir une liaison sans fil d'échange de données avec tout autre dispositif d'éclairage de l'installation d'éclairage, et l'installation comprend des moyens de configuration en un réseau des dispositifs d'éclairage, entre eux et avec les objets environnants qu'ils ont détecté.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La figure 1 illustre de façon schématique un premier mode de réalisation d'un dispositif d'éclairage selon l'invention, se présentant sous la forme d'une lampe de bureau individuelle, avec les différents objets impliqués dans son fonctionnement.
La figure 2 illustre, sous forme de schémas par blocs, les différents éléments constitutifs du dispositif d'éclairage de la figure 1.
La figure 3 illustre un deuxième mode de réalisation d'un dispositif d'éclairage selon l'invention, se présentant sous la forme d'un plafonnier collectif.
La figure 4 illustre un troisième mode de réalisation de l'invention, où sont associés ensemble, et interagissant entre eux, plusieurs dispositifs d'éclairage tels que ceux illustrés figures 1 et 3.
La figure 5 illustre un quatrième mode de réalisation de l'invention, qui est une généralisation du précédent par mise en réseau global de tous les dispositifs d'éclairage et objets susceptibles d'interagir entre eux.

Comme indiqué plus haut, l'invention propose un système automatisé et "intelligent" d'extinction - et subsidiairement d'allumage - automatique d'une ou plusieurs sources lumineuses, sans intervention des individus, ou seulement à titre secondaire.

On décrira par la suite diverses forme de réalisation permettant de commander aussi bien l'allumage que l'extinction des sources lumineuses, mais on comprendra que l'invention est applicable tout particulièrement à des réalisations conçues seulement pour commander l'extinction des sources lumineuses, dans la mesure où la finalité ultime de l'invention est la recherche d'économie d'énergie. Dans ce dernier cas, le système laisse les utilisateurs allumer les sources lumineuses, le système gérant l'extinction des lampes inutiles lorsque celles-ci ne sont pas utilisées.

L'invention fait intervenir des techniques d'interfaçage radio sans fil, très avantageusement selon des spécifications de type *Bluetooth* (marque déposée du *Bluetooth* SIG, Inc.) ou analogue.

Le choix de la technologie *Bluetooth* est particulièrement avantageux compte tenu de son caractère universel et évolutif, de l'existence de nombreuses fonctionnalités, ainsi que de l'existence de nombreux composants, au surplus peu coûteux, spécialement conçus pour sa mise en oeuvre. C'est également le système qui est aujourd'hui le plus répandu dans nombre d'objets intégrant des fonctions de communication sans fil à courte distance tels que : téléphone portable, ordinateur, appareil photo, souris, clavier, etc. Mais ce choix n'est cependant aucunement limitatif, l'invention pouvant être mise en oeuvre au moyen d'autres techniques de transmission sans fil, dès lors qu'elles mettent en oeuvre les fonctionnalités nécessaires, comme par exemple la norme IEEE 802.11 (ISO/IEC 8802-11) dite "WiFi".

### Exposé des concepts sous-tendant l'invention

L'invention fait appel à une caractéristique particulière de la technologie *Bluetooth,* à savoir la possibilité pour un premier appareil équipé d'une interface *Bluetooth* (par exemple un ordinateur) de détecter la présence d'un autre appareil également équipé d'une interface *Bluetooth* (téléphone portable, périphérique informatique, etc.) dans son rayon d'action, de manière entièrement automatique sans que l'utilisateur n'ait aucune manipulation à faire pour activer la liaison entre les deux appareils, liaison qui peut devenir immédiatement opérationnelle dès que l'utilisateur pénètre avec, par exemple, son téléphone dans le rayon d'action du premier appareil.

On appellera par la suite "objet" tout équipement, dispositif ou accessoire, mobile ou sédentaire, incluant une interface radio de type *Bluetooth* ou analogue, essentiellement une interface permettant à un premier objet de détecter de manière entièrement automatique la présence d'un second objet (ou de plusieurs objets) dans le rayon d'action du premier, avec vérification permanente, en tâche de fond, de l'apparition ou de la disparition de l'objet second dans ce rayon d'action.

Les objets en question peuvent être des objets préexistants, non modifiés, tels que : téléphone portable, oreillette, ordinateur portable, périphérique informatique (souris, clavier), assistant numérique personnes (PDA), appareil photo, jouet, etc. Il pourra s'agir aussi de tout autre appareil incluant spécifiquement un module de type *Bluetooth* ou analogue aux fins de l'invention, par exemple des dispositifs d'éclairage que l'on décrira plus bas (lampe, plafonnier) ou encore des boîtiers de télérupteur pour la commande à distance de ces dispositifs d'éclairage.

La détection des objets *Bluetooth* environnants est prévue par le mode "*Inquiry*" du protocole *Bluetooth,* qui consiste à rechercher de façon permanente, en tâche de fond, les nouveaux objets présents dans le rayon d'action d'un objet donné (ci-après "dispositif") et les enregistrer, pour vérifier si ceux qui avaient déjà été enregistrés sont toujours présents, ou non, dans le rayon d'action de ce dispositif.

Plus précisément, les spécifications *Bluetooth* prévoient les étapes successives suivantes dès qu'un objet compatible, par exemple un téléphone portable intégrant une interface *Bluetooth,* entre dans le champ d'action du dispositif :
- "*Device Discovery*" : cette première étape consiste à obtenir de l'objet son adresse unique d'identification (48 bits) ;
- *"Name Discovery*" : l'étape suivante consiste à obtenir un nom particulier désigné "*Friendly Name"* par la spécification, donné à l'objet par son utilisateur, par exemple le nom de famille de l'utilisateur du téléphone ;
- *"Association"* : une fois que le module *Bluetooth* du dispositif a identifié l'adresse et le nom de l'objet reconnu, l'étape suivante consiste à associer (apparier) l'objet et le dispositif, notamment en leur attribuant un identifiant partagé ;
- *"Service Discovery*" : l'étape finale consiste à indiquer au dispositif quelles sont les fonctions de l'objet qui peuvent être pilotées à distance. Il s'agit de la dernière étape du protocole d'établissement de la liaison *Bluetooth.*

On indiquera simplement par la suite que l'objet est "apparié" au dispositif lorsque ces différentes étapes ont été exécutées avec succès.

Cette détection automatique est en général le préalable au transfert des données entre les deux dispositifs, par exemple la mise à jour d'un répertoire du téléphone avec celui de l'ordinateur, le transfert de clichés numériques vers l'ordinateur, etc.

Dans le cadre de l'invention, la fonctionnalité de détection automatique ne sera pas utilisée (ou de façon subsidiaire) en vue de transférer des données entre des objets, mais essentiellement pour évaluer l'activité d'individus à proximité d'un dispositif d'éclairage : les individus transportant avec eux des objets *Bluetooth* (l'exemple typique étant le téléphone portable), le dispositif d'éclairage évaluera grâce à ces objets "marqueurs" l'activité d'un ou plusieurs individus et commandera éventuellement l'allumage et/ou l'extinction des sources lumineuses en fonction des résultats de cette évaluation.

L'ensemble des objets *Bluetooth* ainsi détectés présents dans un même environnement constitue selon l'invention un "cyber-écosystème" rassemblant la population de tous les objets *Bluetooth* susceptibles de communiquer entre eux.

Ces objets peuvent être différenciées en les classant par espèces.

Selon un premier aspect de l'invention, on distinguera entre objets nomades et objets sédentaires. Les objets nomades typiques sont les téléphones, les ordinateurs portables, les oreillettes, etc. ; ils ont la particularité d'appartenir à un individu qui les porte sur lui (téléphone) ou est susceptible de les emporter avec lui (ordinateur portable posé sur un plan de travail). À l'opposé, les ordinateurs de bureau constituent des exemples typiques d'objets sédentaires.

Selon un second aspect de l'invention, les objets sont classifiés selon une typologie binomiale comprenant un nom générique et un nom spécifique, de la même façon que pour la classification des espèces de la nature. Nom générique et nom spécifique correspondent aux deux catégories *"Major Class Device* " et *"Minor Class Device* " des spécifications *Bluetooth,* utilisées lors de la phase d'interrogation (*Inquiry*).

Les classes d'objets utilisées dans le contexte de l'invention pourront être :
- des classes préexistantes telles que : Ordinateur, Téléphone, Oreillette, Jouet, etc. avec des sous-classes telles que : Ordinateur Fixe, Ordinateur Portable, etc. ;
- des classes nouvellement créées pour les besoins de l'invention. Parmi ces classes nouvelles, on décrira plus loin la classe Lampe, avec les sous-classes Lampe de Bureau, Lampe Plafonnier, Lampe de Salon, ainsi que la classe Interrupteur (désignant, plus exactement, un boîtier de commande de télérupteur). Les objets de ces classes nouvelles sont spécialement conçus pour la mise en oeuvre de l'invention, par incorporation d'un module *Bluetooth.*

Selon un troisième aspect de l'invention, certains objets appartenant à des classes existantes seront modifiés par "greffage" d'un module logiciel permettant d'obtenir via l'interface *Bluetooth* non seulement une information de présence ou d'absence de l'objet en question, mais aussi une information de changement d'un état interne de cet objet, par exemple le passage en mode de veille d'un ordinateur.

On va maintenant décrire plusieurs modes de réalisation de l'invention mettant en oeuvre ces concepts.

### Premier mode de réalisation : éclairage individuel (lampe de bureau)

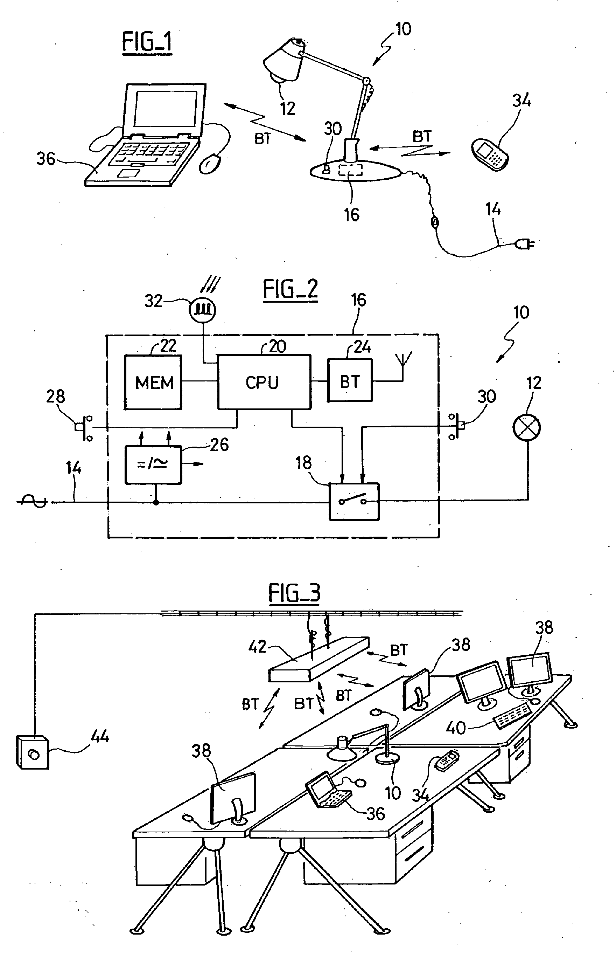

Les figures 1 et 2 illustrent une première forme de réalisation de l'invention, dans sa version la plus simple.

L'élément central en est une lampe de bureau 10 comprenant une source lumineuse 12 reliée au secteur par un câble 14 via un module 16, par exemple un module intégré dans le socle de la lampe. En variante, le module peut se présenter sous la forme d'un accessoire indépendant se présentant à intercaler entre une lampe traditionnelle et une prise secteur. Le module 16 comporte un relais 18, qui peut être un relais statique, commandé par une unité centrale 20. Cette unité centrale est associée à une mémoire 22 et à un module d'interfaçage radio *Bluetooth* 24. Les différents circuits électroniques sont alimentés de façon permanente par un convertisseur 26. Il est par ailleurs prévu un bouton 28 de remise à zéro de l'unité centrale 20, par exemple un bouton placé sous le socle de la lampe. D'autre part, un interrupteur 30 aisément accessible permet à l'utilisateur de commander manuellement l'allumage ou l'extinction de la lampe. Enfin, un capteur 32 permet d'évaluer le niveau d'éclairement ambiant ; ce capteur est disposé dans une zone protégée de l'éclairement direct de la source lumineuse 12.

Cette lampe fonctionne de la manière suivante.

Elle est posée sur un plan de travail, où elle constitue un objet (au sens "objet *Bluetooth*") fixe de l'environnement. On peut trouver d'autres objets, par exemple un téléphone 34 et un ordinateur portable 36, qui l'un et l'autre sont des objets nomades, en général personnels, apportés et emportés par une personne susceptible d'évoluer autour du bureau (et donc de la lampe 10) et de s'y installer.

Au moment de la mise en place de la lampe sur le bureau, l'utilisateur apparie son téléphone portable avec la lampe, de manière que cette dernière reconnaisse ce téléphone particulier, et donc l'utilisateur auquel il appartient. On établit ainsi une relation symbiotique entre la lampe et un objet *Bluetooth* associé : le téléphone spécifiquement apparié avec la lampe, éventuellement un autre téléphone, ou un ordinateur portable particulier, etc. Cet appariement permet à la lampe de mémoriser les caractéristiques de la liaison symbiotique, notamment :
- l'adresse *Bluetooth* du téléphone,
- son nom (*Friendly Name),*
- le type de périphérique (*Major Class Device*),
- le sous-type de périphérique (*Minor Class Device*).

Une fois l'appariement effectué, la lampe se connecte puis se déconnecte.

Après cette phase d'appariement, la lampe vérifie à intervalles réguliers, par exemple toutes les deux minutes, que le téléphone en question est présent. Pour cette détection, le protocole *Bluetooth* est utilisé dans sa plus simple expression, à savoir une requête *Inquiry,* sans qu'il soit besoin d'utiliser aucun bouton ni aucune commande sur la lampe ni sur le téléphone ; il n'y a pas non plus de transfert de données entre la lampe et les objets *Bluetooth* à ce stade.

La requête *Inquiry* permet à la lampe de s'informer de la présence des objets *Bluetooth* autour d'elle. La disparition d'un objet *Bluetooth* est détectée par le résultat négatif d'une requête *Inquiry.*

La comparaison de l'adresse *Bluetooth* mémorisée par la lampe avec celle des objets *Bluetooth* détectés permettra à la lampe de déterminer si un objet *Bluetooth* donné est ou non le téléphone qui lui est associé par une liaison symbiotique, c'est-à-dire celui avec lequel elle a été préalablement appariée.

Lorsque le téléphone apparaît dans le rayon d'action de la lampe, celle-ci peut prendre la décision de s'allumer, par commande du relais 18. Si le téléphone disparaît pendant une durée suffisamment longue, alors la lampe prend la décision de s'éteindre.

Dans le cas de deux téléphones appariés, l'apparition dans le rayon d'action de la lampe de l'un des deux téléphones indique la présence d'un utilisateur et peut commander l'allumage ; en revanche, pour prendre une décision d'extinction, il est nécessaire que les deux téléphones aient disparu du rayon d'action de la lampe.

En ce qui concerne l'interrupteur 30, le fonctionnement de celui-ci est combiné à la commande automatique de manière que l'utilisateur soit en toutes circonstances maître de l'allumage ou de l'extinction de la lampe. Les actions commandées par l'interrupteur 30 sont exécutées immédiatement et de façon inconditionnelle ; elles sont toujours prioritaires sur les actions décidées de manière automatique par l'algorithme exécuté par l'unité centrale 20.

Une commande de l'interrupteur 30 a pour effet de forcer l'allumage de la lampe si celle-ci est à l'état éteint (sans pour autant inhiber l'algorithme de commande d'extinction), ou de forcer l'extinction de la lampe si celle-ci est à l'état allumé (sans pour autant inhiber l'algorithme de commande d'allumage).

Ainsi, dans l'hypothèse où l'utilisateur arrive à son bureau mais que son téléphone est déchargé, la lampe ne s'allumera pas automatiquement ; l'interrupteur sera alors utilisé pour allumer la lampe. Inversement, s'il fait sombre, l'utilisateur peut décider d'allumer la lampe bien que le système automatique n'ait encore déclenché aucune action.

Un certain nombre de perfectionnements peuvent être apportés au fonctionnement que l'on vient de décrire.

En particulier, afin de réduire les situations de fonctionnement intempestif de la lampe, dues notamment à des faux positifs, les décisions d'allumage et - surtout - d'extinction prises par l'algorithme exécuté par l'unité centrale 20 peuvent être conditionnées à d'autres critères que la simple détection de la présence ou non de l'objet.

En particulier, le protocole *Bluetooth* permet d'évaluer la qualité du lien radio, sous forme d'une valeur dénommée RSSI (*Received Signal Strength Indication).*

Après avoir détecté la présence du téléphone qui lui est associé par une liaison symbiotique, la lampe mesure le RSSI puis, à chaque requête *Inquiry*, enregistre la valeur RSSI correspondante. La séquence des valeurs RSSI est mémorisée et analysée par l'algorithme de commande d'extinction :
- si la lampe détecte une disparition brutale du téléphone alors que le RSSI est élevé, elle peut avec confiance estimer que son propriétaire s'est absenté et déclencher l'extinction ;
- en revanche, si le RSSI baisse lentement et que, lorsque le RSSI est faible, le téléphone disparaît puis réapparaît de façon épisodique, il est probable qu'il est en train de se décharger : dans ce cas, la lampe estime que la disparition du téléphone n'est pas certaine et ne déclenche pas l'extinction, ou pas immédiatement.

Un autre indicateur peut être obtenu en surveillant heure après heure la présence du téléphone. Après plusieurs journées, on peut définir les plages horaires moyennes de présence du téléphone, et donc estimer les habitudes de l'utilisateur. Cette analyse permet de définir un critère de probabilité de disparition en fonction de l'heure, probabilité qui pourra servir à pondérer les autres critères d'extinction de la lampe. On notera que cette procédure implique seulement de détecter des évènements sur des plages d'une heure et d'en constituer une statistique sur 24 plages successives, de façon répétée sur plusieurs jours ; cette analyse n'impose pas la connaissance de l'heure, donc ne nécessite pas de réglage d'une horloge de la lampe.

Par ailleurs, l'algorithme de commande d'allumage ou d'extinction peut utiliser des informations issues d'autres objets *Bluetooth* que le(s) téléphone(s).

En particulier, la lampe peut surveiller l'ordinateur portable 36 pour estimer la présence ou l'absence de l'utilisateur. En utilisant le *Major Class Device* du protocole *Bluetooth,* la lampe connaît la catégorie de l'objet qui détecté, donc elle peut par exemple savoir s'il s'agit d'un téléphone ou d'un ordinateur. Le *Minor Class Device* lui indiquera s'il s'agit d'un ordinateur portable ou d'un ordinateur fixe. De la même manière que la lampe surveille la présence ou l'absence d'un téléphone, elle peut surveiller la disparition d'un ordinateur portable de son rayon d'action. Le résultat est le même lorsque l'utilisateur éteint son ordinateur de bureau : la lampe ne le voit plus, elle considère donc que l'utilisateur est parti.

Un critère supplémentaire pour décider de l'extinction de la lampe peut être le passage de l'ordinateur en mode de veille. La plupart des ordinateurs sont en effet programmés pour activer un programme "écran de veille" de façon automatique lorsque le clavier et la souris ne sont pas utilisés pendant un certain temps, et le système d'exploitation de l'ordinateur peut être avantageusement adapté pour transmettre par la liaison *Bluetooth* une information sur le statut de l'ordinateur, permettant à la lampe de reconnaître que l'ordinateur est en veille. Ce critère supplémentaire peut être combiné aux autres : par exemple, lorsque le téléphone de l'utilisateur disparaît et que son ordinateur passe en veille, alors l'utilisateur est très certainement absent du bureau et l'extinction de la lampe peut être déclenchée.

L'indication du passage en mode de veille de l'ordinateur peut par exemple servir à modifier le *"Minor Class Device*" de manière à définir pour la classe "ordinateur" une sous-classe "en veille". Le changement d'état pourra être ainsi détecté dès la prochaine phase *Inquiry* sans qu'il y ait besoin d'initier de transfert de données. En variante, il est possible également d'adresser un message de l'ordinateur vers la lampe en utilisant le profil SPP (*Serial Port Profile*) du protocole *Bluetooth* lors du passage en veille.

Pour éviter un fonctionnement inapproprié et augmenter la pertinence de la décision d'extinction ou d'allumage de la lampe, l'algorithme de commande d'allumage ou extinction peut également prendre en compte le niveau d'éclairement ambiant, mesuré par le capteur 32 (qui est disposé dans une zone protégée de l'éclairement direct de la source lumineuse). Ainsi, lorsque la lampe est éteinte et que le téléphone apparaît dans son rayon d'action, mais que la lumière ambiante est forte, la lampe ne s'allumera pas car cela n'est pas nécessaire. Elle peut simplement indiquer qu'elle a bien détecté et enregistré l'apparition du téléphone en "saluant" l'utilisateur par un bref clignotement lumineux. La lampe s'allumera ultérieurement, si le téléphone est toujours présent et que la lumière est faible.

Il est possible de prévoir un algorithme élaboré mémorisant les variations à long terme du niveau d'éclairement ambiant détecté par le capteur, et tenant également compte de l'état allumé ou éteint de la lampe (pour évaluer la quantité de lumière due à la lampe elle-même).

L'algorithme d'analyse des variations du niveau d'éclairement peut être du même type que celui décrit dans le WO-A-2007/015009 (Seydoux). L'algorithme décrit par ce document permet notamment de définir des seuils de déclenchement automatique, à l'allumage et à l'extinction, d'un rétroéclairage d'afficheur LCD. Les enseignements de ce document peuvent être transposés à la présente invention, en inversant le sens des commandes (dans le document cité il s'agissait d'éteindre l'afficheur lorsqu'il faisait sombre, tandis que dans la présente invention il s'agit d'allumer la lampe lorsque l'éclairage ambiant baisse, et *vice versa*).

L'algorithme décrit par ce document met en oeuvre une phase d'étalonnage à l'issue de laquelle sont déterminés le minimum moyen et le maximum moyen du niveau d'éclairement journalier. Ces deux valeurs permettent de connaître la dynamique de lumière qui peut être captée par le détecteur : si cette dynamique est supérieure à un seuil prédéterminé, la lampe considère que l'algorithme pourra fonctionner de manière satisfaisante ; dans le cas contraire, elle considère que la gestion automatique en fonction de l'éclairement ne sera pas fiable, et la désactive.

L'étalonnage permet non seulement de valider la prise en compte du niveau d'éclairement ambiant comme critère de commande de la lampe, mais également de définir des seuils de déclenchement, à l'allumage et à l'extinction. Essentiellement, à partir des valeurs minimale moyenne et maximale moyenne (corrigées pour éliminer les échantillons les moins significatifs), l'algorithme détermine de manière dynamique des seuils de transition du passage de l'obscurité vers la lumière, et de passage de la lumière vers l'obscurité, ces deux seuils étant différenciés pour minimiser les risques d'oscillation entre deux états. Le niveau d'éclairement mesuré par le capteur est comparé à ces seuils, l'algorithme imposant que le franchissement du seuil soit maintenu pendant un temps minimal avant de valider le changement d'état (allumage ou extinction) de la lampe : en d'autres termes, il y a une hystérésis dans le fonctionnement.

On trouvera plus de détails, ainsi que diverses variantes et compléments de cet algorithme, dans le WO-A-2007/015009 précité.

Outre le capteur d'éclairement ambiant, d'autres capteurs peuvent être associés à la lampe.

Ces autres capteurs sont notamment appropriés au cas où la lampe est utilisée dans un environnement domestique, dans un salon ou un séjour.

En effet, dans ces situations la disparition d'un objet *Bluetooth* n'est pas un critère toujours pertinent, dans la mesure où, chez lui, l'utilisateur peut très bien laisser le téléphone dans son salon sans pour autant se trouver dans cette pièce.

On peut alors associer à la lampe un détecteur d'émissions infrarouges du type de celles émises par les télécommandes des téléviseurs, magnétoscopes, jeux vidéo, etc. La lampe dispose ainsi d'un critère supplémentaire qui est la mesure de l'activité de ces télécommandes. Si à une période d'utilisation fréquente des télécommandes succède une période sans aucune émission, il est probable que plus aucun utilisateur ne se trouve dans la pièce, ce qui pourra constituer un critère pertinent pour décider de l'extinction de la lampe. Celle-ci pourra par exemple s'éteindre lorsque (i) il n'y a pas d'apparition d'objet *Bluetooth* (en revanche, l'objet peut disparaître, par exemple un téléphone qui se décharge durant la nuit) et (ii) il n'y a pas d'activité infrarouge provenant d'une télécommande.

Bien sûr, la lampe possède un interrupteur propre permettant de forcer son état à l'allumage ou à l'extinction indépendamment du résultat de l'algorithme de commande.

En variante ou en complément, il est possible d'utiliser le signal délivré par un détecteur de déplacement (détecteur volumétrique ou détecteur thermique du même type que ceux utilisés par les alarmes) pour fournir un critère supplémentaire d'extinction éventuelle de la lampe.

Enfin, outre le protocole *Inquiry* de détection d'objets dans l'environnement de la lampe, d'autres protocoles *Bluetooth* peuvent être utilisés de façon subsidiaire, notamment :
- protocole FTP de transfert de fichiers, pour mettre à jour par *Bluetooth* le logiciel de la lampe,
- protocole SPP (*Serial Port Profile*), utilisé en mode client-serveur pour connecter un terminal à la lampe, de manière à régler certains paramètres du logiciel de cette dernière, connaître le numéro de version de son logiciel, changer son *Friendly Name,* modifier les paramètres des algorithmes de décision, etc.

### Deuxième mode de réalisation : éclairage collectif (plafonnier)

La figure 3 illustre une deuxième forme de réalisation de l'invention, adaptée à un usage collectif.

Sur la figure 3, on a illustré un aménagement de bureau de type *open space* (bureau paysager) avec plusieurs plans de travail individuels disposés à proximité l'un de l'autre.

Sur ces plans de travail on trouve divers objets *Bluetooth* par exemple :
- un ordinateur portable 36,
- des ordinateurs fixes 38,
- des périphériques tel qu'un clavier *Bluetooth* 40,
- une lampe individuelle 10.

Dans cette seconde forme de réalisation de l'invention, l'élément décisionnaire est un plafonnier collectif 42 disposé au-dessus des plans de travail.

Ce plafonnier 42 intègre une interface *Bluetooth,* avec des circuits internes comparables à ceux de la lampe individuelle décrite plus haut en référence aux figures 1 et 2.

Par rapport au mode de réalisation précédent, le fonctionnement de ce plafonnier est cependant modifié pour tenir compte de la multiplicité des personnes susceptibles d'évoluer dans l'environnement du plafonnier, non seulement les personnes dont la table de travail se situe sous le plafonnier, mais également d'autres personnes de passage, qui peuvent avoir sur elles un téléphone *Bluetooth.* Un utilisateur donné peut également aller et venir, et se trouver à proximité d'un plafonnier qui ne correspond pas à sa table de travail. De ce fait, il est difficilement envisageable de demander aux divers utilisateurs d'apparier leur téléphone avec tous les plafonniers du bureau.

La détection de l'activité se fera donc d'une manière différente, n'utilisant pas la relation symbiotique avec un téléphone portable particulier, comme c'était le cas pour une lampe individuelle.

Pour évaluer l'activité des individus évoluant dans son environnement, le plafonnier établit en permanence la liste des objets *Bluetooth* situés dans son rayon d'action, objets détectés par la phase *Inquiry* du protocole Blue*tooth.*

Pour chaque objet détecté, le plafonnier 42 mémorise dans une rubrique d'une "table des objets *Bluetooth"* :
- son adresse *Bluetooth,*
- son nom (*Friendly Name),*
- son type et son sous-type.

Dans la même table, le plafonnier mémorise et met à jour des informations statistiques relatives à cet objet, telles que :
- la date de sa première apparition,
- la date de sa dernière disparition,
- le nombre moyen d'apparitions/disparitions par 24 heures (moyenne calculé par exemple sur les 30 derniers jours),
- la durée moyenne des périodes d'apparition.

Dans la même table, le plafonnier mémorise également :
- la catégorie fonctionnelle de l'objet, à savoir "objet mobile" ou "objet collaboratif" et, dans le cas d'un objet collaboratif, le point de savoir si cet objet appartient au *cluster* ("grappe") du plafonnier ou à un autre *cluster*. Cette typologie sera explicitée plus bas.

Le plafonnier mémorise également un historique détaillé des apparitions, par exemple dans une liste linéaire chaînée à chaque rubrique de la "table des objets *Bluetooth",* avec à chaque fois la date et l'heure de la précédente apparition et de la précédente disparition.

La première étape consiste à opérer une classification par catégorie fonctionnelle des objets *Bluetooth* détectés et répertoriés dans la "table des objets *Bluetooth",* de manière à identifier les objets qui définis comme "objets mobiles".

Ces objets mobiles sont ceux que les utilisateurs sont susceptibles d'emporter avec eux, par exemple ceux dont la *Major Class Device* est : *Phone*, en particulier ceux dont la *Minor Class Device* est *Cellular* ou *Smartphone*. Ou bien, ceux dont la *Major Class Device* est Computer et la *Minor Class Device* est : *Laptop, Handheld, Palm, Wearable*.

Entrent aussi dans la catégorie des objets mobiles les oreillettes, les jouets *Bluetooth,* etc.

En revanche, les souris et les claviers *Bluetooth* n'entrent pas dans la catégorie des objets mobiles : normalement, les utilisateurs ne les emportent pas avec eux.

Le logiciel mesure ensuite le taux d'apparition et de disparition des objets mobiles. Cette mesure permet de supprimer de la liste précédente les objets identifiés comme mobiles mais qui ne bougent pas, par exemple les ordinateurs portables que les utilisateurs laissent en permanence sur leur bureau.

La décision d'extinction du plafonnier est prise lorsque les objets mobiles ainsi sélectionnés cessent d'apparaître et de disparaître.

Le critère d'extinction peut être pondéré en fonction des données statistiques du taux moyen d'objets mobiles par tranche horaire.

Une autre catégorie d'objets identifiés par le logiciel du plafonnier est ce que l'on dénommera "objets collaboratifs".

Dans l'exemple illustré il s'agit des lampes de bureau 10 (lampes qui sont des objets *Bluetooth,* du même type que celles illustrées figures 1 et 2), et les logiciels d'écran de veille des ordinateurs.

L'indication du changement d'état de la lampe (allumage ou extinction automatique ou bien par action d'un utilisateur), ou le passage en mode veille de l'ordinateur seront transmises au plafonnier par transfert de données *Bluetooth* par exemple, comme exposé dans le mode de réalisation précédent en modifiant le "*Minor Class Device*" : pour la classe "lampes de bureau" on définit une sous-classe "éteinte" et pour la classe "ordinateur", une sous-classe "en veille". Le changement d'état pourra être ainsi détecté dès la prochaine phase "*Inquiry*" sans qu'il y ait besoin d'initier de transfert de données. En variante, il est possible également d'adresser un message de l'objet collaboratif vers le plafonnier utilisant le profil SPP (Se*rial Port Profile*) du protocole *Bluetooth* lors du passage en veille ou du changement d'état de la lampe.

Ces indications constitueront pour le plafonnier une indication utile pour prendre une décision d'allumage ou d'extinction.

De la même manière que pour la lampe individuelle du premier mode de réalisation, la commande du plafonnier 42 est supervisée par un interrupteur 44 qui est prioritaire sur toute commande automatique, c'est-à-dire que si le plafonnier est allumé, la manoeuvre de l'interrupteur le forcera à l'extinction, et *vice versa*. On notera que la manoeuvre de l'interrupteur n'inhibe pas le fonctionnement automatique, il a seulement pour effet de forcer le plafonnier à passer dans l'état "allumé" ou "éteint" où il ne se trouve pas encore, c'est-à-dire d'anticiper la commande d'allumage ou d'extinction. En d'autres termes, si le plafonnier est éteint et que l'on force son allumage par l'interrupteur 44, le plafonnier s'allume et le logiciel continue à analyser l'activité de l'environnement pour déclencher le moment venu une extinction automatique.

### Troisième mode de réalisation : mise en réseau des éclairages

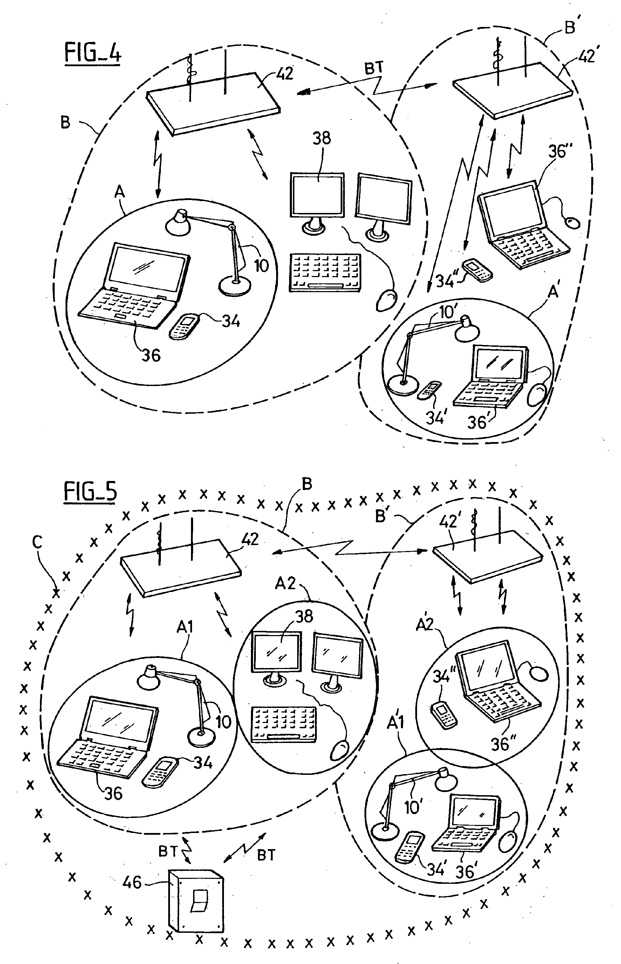

La figure 4 illustre une troisième forme de réalisation de l'invention, qui est une généralisation des précédentes.

Le cyber-écosystème est par exemple celui d'un bureau collectif où cohabitent toutes sortes d'objets *Bluetooth* :
- lampes individuelles 10, 10', ...
- téléphone portables 34, 34', 34", ...
- ordinateurs portables 36, 36', ...
- ordinateurs fixes 38 , ...
- et une pluralité de plafonniers 42, 42', ...

Ces objets sont associés entre eux selon deux niveaux d'organisation :
1°) autour de chaque lampe *Bluetooth* 10, 10', ..., qui a été appariée à un téléphone respectif 34, 34', ... Ce niveau d'organisation est illustré par le contour en trait plein A, A', ...
2°) autour de chaque plafonnier 42, 42' ..., qui mesure l'activité de tous les objets *Bluetooth* à sa portée, qu'il s'agisse d'objets mobiles, d'objets collaboratifs ou d'objets fixes : ce niveau d'organisation est illustré par le contour en trait interrompu B, B', ...

Les téléphones 34, 34', ... sont rattachés par une relation symbiotique univoque à une lampe 10, 10', ... donnée. Les objets collaboratifs sont rattachés à un plafonnier donné, c'est-à-dire qu'un objet collaboratif est géré par un seul plafonnier à la fois.

Chaque plafonnier établit et met à jour sa "table des objets *Bluetooth"* propre, de la manière exposée plus haut en référence au deuxième mode de réalisation.

Chaque plafonnier étant lui-même un objet *Bluetooth,* il est détectable par un autre plafonnier. Le plafonnier 42 peut ainsi détecter dans son rayon d'action la présence du plafonnier 42', identifié en tant que tel par exemple par un *Friendly Name* spécifique tel que "EcoLampe".

De façon caractéristique de l'invention, les différents plafonniers vont être configurés entre eux en un réseau, de manière à définir une topologie hiérarchisée de réseau (i) entre les plafonniers et (ii) à partir de chacun des plafonniers, avec les objets environnants qu'ils seront chargés de gérer. Pour cela, l'invention met à profit, de façon originale, les possibilités particulières offertes par les spécifications *Bluetooth* de réaliser non seulement des liaisons point à point entre deux objets, mais également d'établir et de gérer des réseaux plus ou moins complexes constitués entre un certain nombre de ces objets.

Un premier type de réseau est le *piconet* ou "micro-réseau", qui se crée de manière automatique lorsque plusieurs objets *Bluetooth* se trouvent dans un même rayon. Le piconet suit une topologie en étoile, avec un maître et plusieurs esclaves. Les esclaves peuvent être soit "actifs", c'est-à-dire en communication avec le maître, soit "parqués", c'est-à-dire mis provisoirement en sommeil avec possibilité pour le maître de les réveiller pour les rendre actifs. Les communications sont directes entre le maître et les esclaves ; les esclaves ne peuvent pas communiquer entre eux.

Un second type de réseau selon les spécifications *Bluetooth* est le *scatternet* ou "réseau éclaté", qui est un réseau formé de plusieurs piconets reliés entre eux par un esclave commun, qui possède plusieurs maîtres. Ceci permet, géographiquement, d'augmenter l'étendue du réseau par recouvrement partiel et chaînage de plusieurs piconets.

Comme on va l'exposer, une configuration en réseau des différents plafonniers peut être réalisée de manière à la fois automatique et adaptative, c'est-à-dire que l'organisation du réseau pourra être modifiée automatiquement par exemple en cas d'ajout, de retrait ou de déplacement d'un plafonnier, et ce de façon entièrement transparente pour les utilisateurs.

À l'origine, tous les plafonniers sont indépendants et sur le même plan du point de vue de la topologie du réseau à configurer, c'est-à-dire que le plafonnier qui sera le maître du réseau hiérarchisé n'est pas nécessairement déterminé a *priori* et pourra être l'un quelconque des plafonniers du système, en fonction des circonstances et de la topographie des bureaux.

La *première phase* du protocole de configuration du réseau est exécutée de manière autonome par chacun des plafonniers.

Conformément au protocole *Bluetooth* standard, chaque plafonnier se configure en mode "découvrable" de manière à pouvoir être reconnu par les autres.

Il va ensuite rechercher tous les autres plafonniers situés dans son rayon d'action, c'est-à-dire avec lesquels il lui est possible d'établir une communication sans fil satisfaisante. En effet, en raison de l'éloignement des plafonniers et de la portée volontairement limitée de la transmission *Bluetooth,* il est vraisemblable que certains des plafonniers ne seront pas visibles de tous les autres, ou que la liaison soit d'une qualité trop faible.

Le plafonnier examine également si l'objet *Bluetooth* avec lequel il a établi une liaison effective est bien un autre plafonnier destiné à la constitution d'un système selon l'invention, et non un quelconque autre objet *Bluetooth.* Cette vérification de compatibilité peut notamment se fonder sur un paramètre *Bluetooth* libre spécifiquement paramétré, par exemple le *Dedicated Inquiry Access Code* ou un *Friendly Name* qui sera commun ("EcoLampe") à tous les plafonniers compatibles avec le système de l'invention.

Sur la base des résultats de cette recherche, chaque plafonnier établit une "table de proximité" où chacun des plafonniers qui lui est visible est identifié de manière univoque, par exemple par son adresse MAC (*Media Access Control*), qui dans le cas présent est l'adresse *Bluetooth.* Cette table comprend par exemple, pour chacun des plafonniers trouvés, son adresse MAC et la version de son logiciel.

La *deuxième phase* du protocole de configuration du réseau consiste, parmi tous les plafonniers qui ont été découverts à la phase précédente, à désigner l'un d'entre eux comme de tête de réseau, c'est-à-dire à partir duquel sera hiérarchisé le réseau.

La désignation du plafonnier de tête de réseau est opérée par un algorithme qui attribue une note en fonction de divers paramètres, par exemple le numéro de version du logiciel le plus récent, l'adresse MAC la plus élevée, etc. Chaque plafonnier se connecte à chacun des autres plafonniers répertoriés dans sa table de proximité, pour échanger des messages permettant d'évaluer le critère du plafonnier interrogé par rapport à son propre critère.

Chaque plafonnier cherche ainsi le meilleur "candidat tête de réseau" parmi les autres plafonniers répertoriés et, pour confirmer sa décision, lui envoie un message question/réponse tel que : "*Est*-*ce que tu as mieux ?"* (sous-entendu : *"...que la note donnée par l'algorithme appliqué à ma table de proximité*"). La réponse sera *"J'ai mieux", "Je n'ai pas mieux"* ou *"Je suis le plafonnier de tête*". Puis le plafonnier qui pense avoir la meilleure note essaie de se connecter à tous les autres plafonniers, et ainsi de suite, de proche en proche jusqu'à trouver le plafonnier ayant la note la plus élevée, qui sera alors désigné comme plafonnier de tête.

Après un certain nombre d'itérations, cette deuxième phase aboutit à la désignation du plafonnier de tête de réseau.

La *troisième phase* du protocole de configuration du réseau est une phase d'organisation de ce réseau à partir du plafonnier de tête de réseau : il s'agit de passer d'une configuration ou tous les plafonniers jouent le même rôle dans le réseau, et où il peut exister plusieurs chemins pour aller d'un plafonnier à un autre, à une topologie de réseau hiérarchisé en forme de graphe orienté, définissant un chemin unique entre le plafonnier de tête et tout autre plafonnier du réseau. Pour cela, le plafonnier de tête commence par collecter les tables de proximité de tous les autres plafonniers. Chacun de ces derniers va envoyer sa table de proximité au "candidat" trouvé à l'étape précédente, qui va lui-même l'envoyer à son propre "candidat" ainsi de suite jusqu'à atteindre le plafonnier de tête.

Le plafonnier de tête explore alors toute les tables de proximité collectées et construit un graphe de réseau fonction des visibilités de chacun des plafonniers.

Un certain nombre de messages sont ainsi échangés entre les plafonniers, en provenance ou à destination du plafonnier de tête. Ceci permet à ce dernier de former une carte du réseau sous sa forme initiale, à partir des tables de visibilité de tous les autres plafonniers, et ce même si un plafonnier ne voit pas tous les autres. Ce réseau peut être de très grande étendue, par exemple lorsqu'il s'agit de contrôler l'éclairage d'un étage entier de bureaux.

En fonction des visibilités mutuelles, plusieurs topologies peuvent être envisagées à partir de la tête de réseau, par une combinaison de piconets et de scatternets, au sens des spécifications *Bluetooth.* Le choix de la topologie pourra être alors dicté par des critères tels que :
- la possibilité d'établir une liaison directe du plafonnier de tête à chacun des autres plafonniers du réseau (absence de noeud caché) ;
- la recherche de la topologie la plus simple possible : en évitant par exemple la constitution de scatternets, si une topologie de piconets est possible et suffisante.

L'algorithme construit un graphe où chaque noeud correspond à un plafonnier et où deux noeuds sont connectés si et seulement si l'un au moins des plafonniers voit l'autre.

Une fois le graphe construit, l'algorithme détermine les points d'articulation, c'est-à-dire les points du graphe dont la suppression entraînerait le partitionnement du graphe en plusieurs composantes connexes, c'est-à-dire en plusieurs sous-graphes distincts.

La configuration du réseau est alors révisée de manière à se présenter sous forme d'un scatternet, c'est-à-dire d'une chaîne de piconets. L'algorithme utilise pour cela le graphe de visibilité, et recalcule un réseau optimisé par la connaissance des points d'articulation. Le résultat ou "schéma de routage", qui définit pour chaque plafonnier son rôle dans la transmission des signaux au sein du réseau, se présente sous forme de table de scattemets constituée par le plafonnier de tête et envoyé sous la forme de messages encapsulés à chacun des plafonniers formant les noeuds du graphe.

Une fois achevée cette troisième phase du processus d'initialisation, le réseau est constitué, et il est opérationnel pour gérer la clustérisation des objets collaboratifs.

La *quatrième phase* du protocole consiste à regrouper en clusters les objets collaboratifs détectés par les plafonniers, sachant qu'un objet collaboratif donné ne doit être géré que par un seul plafonnier à la fois.

Les plafonniers s'échangent entre eux leurs "tables des objets *Bluetooth"* via le réseau constitué de la manière indiquée plus haut. Lorsqu'un plafonnier reçoit une table, il vérifie l'adresse *Bluetooth* de l'expéditeur pour déterminer sa position relative dans le réseau. SI l'adresse de l'expéditeur est plus petite que la propre adresse du plafonnier, c'est alors ce dernier qui sera chargé de sélectionner les objets collaboratifs dans la "table des objets *Bluetooth*". Le critère de sélection peut être notamment la valeur du RSSI, priorité étant donnée au plafonnier qui reçoit de l'objet collaboratif le signal le plus proche : on peut en effet penser que c'est ce plafonnier qui est physiquement le plus proche de l'objet, et on lui attribuera alors la "tutelle" de l'objet collaboratif en question, en supprimant la référence de cet objet collaboratif particulier de la "table des objets *Bluetooth"* des autres plafonniers.

Les critères d'extinction des plafonniers sont du même type que ceux exposés plus haut dans le cadre du deuxième mode de réalisation, avec possibilité de généralisation, par exemple en déclenchant l'extinction lorsque :
- tous les objets collaboratifs de l'environnement sont éteints, ou ne sont plus visibles, et
- le taux d'apparition des objets mobiles est nul ou très faible.

Le plafonnier pourra s'aider, comme indiqué plus haut, de statistiques faites sur plusieurs jours du taux d'apparition des objets mobiles en fonction de l'heure du jour, de manière à définir un seuil variable de déclenchement de l'extinction en fonction du taux d'apparition : ce seuil sera plus élevé en milieu de journée, et plus faible aux heures creuses.

### Quatrième mode de réalisation : contrôle centralisé du réseau

La figure 5 illustre une quatrième forme de réalisation, qui est une généralisation du cas précédent décrit en relation avec la figure 4.

Il s'agit de superviser l'ensemble du réseau par un ou plusieurs interrupteurs 46, plus exactement une ou plusieurs commandes de télérupteur incorporant une interface *Bluetooth.* L'interrupteur 46 est donc lui-même un objet *Bluetooth,* à la différence de l'interrupteur 44 de la figure 3.

On définit ainsi un niveau supplémentaire d'organisation, symbolisé par le contour C, qui englobe englobant (i) tous les clusters D, D', ... correspondant aux plafonniers respectifs 42, 42' ... et (ii) l'interrupteur 46 (ou les interrupteurs, s'il ne est prévu plusieurs).

L'interrupteur 46 est un objet configurable par logiciel, par exemple avec un ordinateur qui lui est temporairement connecté.

À cet effet, l'interrupteur constitue une table de toutes les lampes *Bluetooth* (plafonnier et lampe de bureau) du réseau, ces lampes incluant les plafonniers 42, 42', ... et éventuellement les lampes de bureau 10, 10', ... si on le souhaite également. La recherche peut être éventuellement limitée à une profondeur donnée, pour éviter un emballement du processus notamment dans un immeuble de grandes dimensions.

La table des lampes collectée de cette manière est transmise à un ordinateur connecté temporairement à l'interrupteur, et opérateur déclare alors, parmi toutes ces lampes, celles d'entre elles qui devront pouvoir être commandées à partir de l'interrupteur.

Cette étape peut par exemple être réalisée en affichant sur l'écran de l'ordinateur la liste des lampes trouvées et en validant chacune des rubriques de la liste. Si l'opérateur sélectionne l'une des lampes, cette action aura pour effet de transmettre à cette dernière une information correspondante via le réseau qui déclenchera un clignotement permettant à l'opérateur de localiser sa position effective et de lui confirmer qu'elle a bien été "vue" par le logiciel de configuration. L'utilisateur coche une case s'il veut que la lampe soit commandée par l'interrupteur, et continue ainsi à valider chacune des lampes qu'il souhaite commander.

Cette opération peut être répétée pour un autre interrupteur, avec éventuellement une répartition différente des lampes.

Les ordres d'allumage ou d'extinction sont transmis via le réseau de l'interrupteur 46 à chacune des lampes sélectionnées.

Comme dans le cas des interrupteurs 30 (figure 2) et 44 (figure 3) décrits précédemment, l'interrupteur 46 de ce quatrième mode de réalisation permet de forcer le passage des lampes dans un autre état (les lampes éteintes seront forcées à l'allumage, tandis qu'inversement les lampes allumées seront forcées à l'extinction), sans pour autant désactiver l'algorithme automatique d'allumage/extinction.

## Revendications

1. Un dispositif d'éclairage (10 ; 42), comportant :
- un circuit récepteur radio (24),
- des moyens de recherche (20), coopérant avec le circuit récepteur radio pour détecter et identifier des objets environnants (34, 36, 38, 40) présents à proximité du dispositif, ces objets environnants étant eux-mêmes pourvus de circuits émetteurs radio susceptibles de s'interfacer avec ledit circuit récepteur radio, et
- des moyens de commande, aptes à commander une extinction d'une source lumineuse (12),
dispositif **caractérisé en ce que** les moyens de commande d'extinction sont des moyens aptes à coopérer avec les moyens de recherche (20) et comportent des moyens aptes à :
· détecter l'apparition ou la disparition desdits objets environnants dans le rayon d'action du dispositif d'éclairage, et
· déclencher l'extinction de la source lumineuse sur détection de la disparition d'au moins un objet environnant, conditionnellement en fonction de critères prédéterminés d'extinction.

2. Le dispositif de la revendication 1, dans lequel les moyens de commande sont également aptes à :
commander un allumage de la source lumineuse (12) sur détection de l'apparition d'au moins un objet environnant, conditionnellement en fonction de critères prédéterminés d'allumage.

3. Le dispositif de l'une des revendications 1 ou 2, dans lequel les moyens de commande comprennent en outre des moyens aptes à :
· discriminer, parmi les objets environnants détectés, entre objets de type nomade (34, 36) et objets de type sédentaire (38, 40) ; et
· ne déclencher l'allumage et/ou l'extinction de la source lumineuse que sur détection de l'apparition ou de la disparition d'au moins un objet nomade.

4. Le dispositif de l'une des revendications 1 ou 2, comprenant en outre un bouton (30 ; 44) de forçage en allumage de la source lumineuse si celle-ci est éteinte, ou inversement en extinction si elle est allumée, sur action spécifique d'un utilisateur du dispositif d'éclairage (10 ; 42).

5. Le dispositif de la revendication 3, comprenant en outre des moyens de mémorisation d'au moins un identifiant d'utilisateur associé à un objet nomade correspondant, et dans lequel les moyens de commande sont en outre aptes à exclure, parmi les objets nomades reconnus, ceux dont l'identifiant propre ne concorde pas avec au moins un identifiant conservé dans les moyens de mémorisation.

6. Le dispositif de la revendication 5, comprenant en outre des moyens d'appariement préalable aptes, sur action spécifique de l'utilisateur d'un objet nomade, à mémoriser un identifiant utilisateur propre associé à cet objet nomade.

7. Le dispositif de la revendication 2, comprenant en outre un capteur de niveau d'éclairement ambiant (38), et des moyens pour inhiber l'allumage de la source lumineuse en fonction du signal délivré par ce capteur d'éclairement.

8. Le dispositif de la revendication 7, comprenant en outre des moyens pour émettre un clignotement de la source lumineuse, lorsque les moyens de commande déclenchent l'allumage de la source lumineuse mais que ce déclenchement est inhibé en fonction du signal délivré par le capteur d'éclairement.

9. Le dispositif de l'une des revendications 1 ou 2, comprenant en outre des moyens pour mémoriser les variations à long terme du niveau d'éclairement ambiant, et dans lequel les moyens de commande sont en outre aptes à inhiber, ou déclencher, l'allumage et/ou l'extinction de la source lumineuse conditionnellement en fonction desdites variations mémorisées.

10. Le dispositif de l'une des revendications 1 ou 2, dans lequel les moyens de commande sont en outre aptes à discriminer les objets en fonction d'un paramètre de classe d'objet, et exclure les objets appartenant à certaines classes prédéterminées.

11. Le dispositif de la revendication 10, dans lequel les classes d'objets comprennent au moins certaines des classes du groupe : téléphone portable, assistant numérique personnel, ordinateur, clavier, souris, lampe de bureau, commande de télérupteur, oreillette, jouet, avec exclusion d'au moins certaines des classes du groupe : clavier, souris, lampe de bureau.

12. Le dispositif de la revendication 10, dans lequel les moyens de commande sont aptes à discriminer en outre les objets en fonction d'un paramètre de sous-classe d'objet et, pour les classes non exclues, exclure les objets appartenant à certaines sous-classes prédéterminées.

13. Le dispositif de la revendication 12, dans lequel les sous-classes d'objets comprennent, pour la classe ordinateur, les sous-classes du groupe : ordinateur portable, ordinateur fixe, avec exclusion de la sous-classe : ordinateur fixe.

14. Le dispositif de l'une des revendications 1 ou 2, dans lequel les moyens de recherche sont en outre aptes à déterminer un état interne associé à un objet correspondant (10, 36, 46), et les moyens de commande sont en outre aptes à inhiber, ou déclencher, l'allumage et/ou l'extinction de la source lumineuse conditionnellement en fonction dudit état interne.

15. Le dispositif de la revendication 14, dans lequel ledit objet correspondant est un objet nomade de type ordinateur portable (36), et ledit état interne est l'état de veille ou d'activité de cet ordinateur.

16. Le dispositif de la revendication 14, dans lequel ledit objet correspondant est un objet sédentaire de type lampe de bureau (10), et ledit état interne est l'état d'allumage ou d'extinction de cette lampe.

17. Le dispositif de la revendication 14, dans lequel ledit objet correspondant est un objet sédentaire de type commande de télérupteur (46), et ledit état interne est l'état de cette commande.

18. Le dispositif de la revendication 3, dans lequel les moyens de recherche comprennent en outre des moyens de mesure du niveau de réception du signal radio émis par l'objet nomade environnant, et les moyens de commande sont en outre aptes à évaluer un caractère de rapidité des variations du niveau de réception du signal radio et exclure, parmi les objets nomades reconnus, ceux pour lesquels le niveau ne présente pas ledit caractère de rapidité.

19. Le dispositif de l'une des revendications 1 ou 2, comprenant en outre des moyens d'évaluation statistique des taux de présence/absence sur le long terme des objets nomades environnants reconnus, et dans lequel les moyens de commande sont en outre aptes à inhiber, ou déclencher, l'allumage et/ou l'extinction de la source lumineuse conditionnellement en fonction des résultats de ladite évaluation statistique.

20. Le dispositif de la revendication 3, comprenant en outre des moyens pour :
- établir une table des objets environnants détectés et identifiés par les moyens de recherche,
- classer les objets de cette table entre objets de type nomade et objets de type sédentaire, et exclure les objets de type sédentaire,
- détecter les événements d'apparition ou de disparition des objets de type nomade, et
- déclencher l'extinction de la source lumineuse en cas d'absence d'événement d'apparition ou disparition détecté pendant une durée prédéterminée.

21. Le dispositif de la revendication 20, dans lequel ladite table des objets environnants comprend, pour chaque objet, au moins un champ d'identifiant d'objet et au moins un champ de chronologie des événements d'apparition/disparition de cet objet.

22. Le dispositif de la revendication 21, dans lequel le champ d'identifiant d'objet comprend au moins un rubrique du groupe : adresse de l'objet, nom abrégé, classe de l'objet, sous-classe de l'objet.

23. Le dispositif de la revendication 21, dans lequel le champ de chronologie des événements d'apparition/disparition comprend au moins un rubrique du groupe : date de première apparition, date de dernière apparition, date de dernière disparition, nombre moyen d'apparitions/disparitions sur une période donnée, durée moyenne des apparitions, taux relatif des périodes d'apparition/disparition.

24. Le dispositif de la revendication 1, comprenant en outre des moyens pour détecter par un capteur infrarouge des émissions de signal représentatives de l'activité d'une télécommande d'appareil domestique, et forcer l'extinction de la source lumineuse en cas de cessation des détections de signal pendant une durée prédéterminée.

25. Le dispositif de la revendication 1, comprenant en outre des moyens pour détecter par un détecteur volumique ou thermique la présence d'au moins une personne au voisinage du dispositif, et forcer l'extinction de la source lumineuse en cas de cessation des détections de présence pendant une durée prédéterminée.

26. Une installation d'éclairage, **caractérisée en ce qu'**elle comporte :
- une pluralité de dispositifs d'éclairage selon l'une des revendications 1 à 25, chaque dispositif d'éclairage (42) comprenant des moyens émetteurs et récepteurs radio aptes à recherche et établir une liaison sans fil d'échange de données avec tout autre dispositif de l'installation, et
- des moyens de configuration en un réseau des dispositifs d'éclairage, entre eux et avec les objets environnants qu'ils ont détecté.

27. L'installation de la revendication 26, dans lequel les moyens de configuration en un réseau sont des moyens aptes à :
- pour chaque dispositif, rechercher quels sont les objets environnants présents à proximité avec lesquels une liaison d'interfaçage peut être établie, établir à partir des résultats de cette recherche une table des objets environnants visibles, et communiquer aux autres dispositifs la table des objets visibles ainsi établie, et
- définir une topologie de réseau à partir des différents tables d'objets visibles ainsi communiquées.

28. L'installation de la revendication 27, dans lequel les moyens de configuration en un réseau sont en outre aptes à :
- désigner parmi les dispositifs l'un d'entre eux comme dispositif de tête de réseau, et
- définir ladite topologie en un réseau hiérarchisé à partir du dispositif de tête ainsi désigné.

29. L'installation de la revendication 26, comprenant en outre au moins un boîtier de commande de télérupteur (46) comportant :
- des moyens émetteurs/récepteurs radio aptes à recherche et établir une liaison sans fil d'échange de données avec chaque dispositif d'éclairage (42) de l'installation,
- des moyens de paramétrage de ceux des dispositif d'éclairage susceptible d'être contrôlés par ledit boîtier, et
- des moyens pour transmettre à chacun desdits dispositifs d'éclairage susceptibles d'être contrôlés un signal de forçage en allumage ou en extinction de la source lumineuse, sur action spécifique d'un utilisateur sur le boîtier.

30. L'installation de la revendication 29, comprenant en outre des moyens pour définir, à partir de la topologie du réseau, un graphe de diffusion du signal de forçage depuis le boîtier de commande de télérupteur vers lesdits dispositifs d'éclairage susceptibles d'être contrôlés, cette diffusion étant opérée soit directement depuis ledit boîtier, soit indirectement après que le signal ait été relayé, de proche en proche, par un ou plusieurs desdits dispositifs du réseau.

## Patentansprüche

1. Beleuchtungsvorrichtung (10; 42), die aufweist:
- eine Funkempfängerschaltung (24),
- Sucheinrichtungen (20), die mit der Funkempfängerschaltung zusammenwirken, um umgebende Gegenstände (34, 36, 38, 40) zu erfassen und zu erkennen, die in der Nähe der Vorrichtung anwesend sind, wobei diese umgebenden Gegenstände selbst mit Funksenderschaltungen versehen sind, die mit der Funkempfängerschaltung kommunizieren können, und
- Steuereinrichtungen, die ein Ausschalten einer Lichtquelle (12) steuern können,
wobei die Vorrichtung **dadurch gekennzeichnet ist, dass** die Ausschalt-Steuereinrichtungen Einrichtungen sind, die mit den Sucheinrichtungen (20) zusammenwirken können und Einrichtungen aufweisen, die in der Lage sind:
· das Erscheinen oder Verschwinden der umgebenden Gegenstände in der Reichweite der Beleuchtungsvorrichtung zu erfassen, und
· das Ausschalten der Lichtquelle bei Erfassen des Verschwindens mindestens eines umgebenden Gegenstands auszulösen, bedingt abhängig von vorbestimmten Ausschaltkriterien.

2. Vorrichtung nach Anspruch 1, wobei die Steuereinrichtungen ebenfalls in der Lage sind:
ein Einschalten der Lichtquelle (12) bei Erfassung des Erscheinens mindestens eines umgebenden Gegenstands zu steuern, bedingt abhängig von vorbestimmten Einschaltkriterien.

3. Vorrichtung nach einem der Ansprüche 1 oder 2, wobei die Steuereinrichtungen außerdem Einrichtungen enthalten, die in der Lage sind:
· unter den erfassten umgebenden Gegenständen zwischen Gegenständen mobiler Art (34, 36) und Gegenständen ortsgebundener Art (38, 40) zu unterscheiden; und
· das Ein- und/oder Ausschalten der Lichtquelle nur beim Erfassen des Erscheinens oder Verschwindens mindestens eines mobilen Gegenstands auszulösen.

4. Vorrichtung nach einem der Ansprüche 1 oder 2, die außerdem einen Knopf (30; 44) zum Zwangseinschalten der Lichtquelle, wenn diese ausgeschaltet ist, oder umgekehrt zum Zwangsausschalten, wenn sie eingeschaltet ist, bei spezifischer Einwirkung eines Benutzers der Beleuchtungsvorrichtung (10; 42) enthält.

5. Vorrichtung nach Anspruch 3, die außerdem Speichereinrichtungen mindestens einer einem entsprechenden mobilen Gegenstand zugeordneten Benutzerkennung enthält, und wobei die Steuereinrichtungen außerdem in der Lage sind, unter den erkannten mobilen Gegenständen diejenigen auszuschließen, deren eigene Kennung nicht mit mindestens einer Kennung übereinstimmt, die in den Speichereinrichtungen aufbewahrt wird.

6. Vorrichtung nach Anspruch 5, die außerdem Einrichtungen zur vorhergehenden Paarbildung enthält, die bei einer spezifischen Einwirkung des Benutzers eines mobilen Gegenstands in der Lage sind, eine diesem mobilen Gegenstand zugeordnete eigene Benutzerkennung zu speichern.

7. Vorrichtung nach Anspruch 2, die außerdem einen Umgebungsbeleuchtungspegelsensor (38) und Einrichtungen enthält, um das Einschalten der Lichtquelle abhängig von dem von diesem Beleuchtungssensor gelieferten Signal zu verhindern.

8. Vorrichtung nach Anspruch 7, die außerdem Einrichtungen enthält, um ein Blinken der Lichtquelle zu emittieren, wenn die Steuereinrichtungen das Einschalten der Lichtquelle auslösen, dieses Einschalten aber abhängig von dem vom Beleuchtungssensor gelieferten Signal verhindert wird.

9. Vorrichtung nach einem der Ansprüche 1 oder 2, die außerdem Einrichtungen zum Speichern der Langzeitveränderungen des Umgebungslichtpegels enthält, und wobei die Steuereinrichtungen außerdem in der Lage sind, das Einschalten und/oder Ausschalten der Lichtquelle bedingt abhängig von den gespeicherten Veränderungen zu verhindern oder auszulösen.

10. Vorrichtung nach einem der Ansprüche 1 oder 2, wobei die Steuereinrichtungen außerdem in der Lage sind, die Gegenstände abhängig von einem Gegenstandsklasse-Parameter zu unterscheiden und die Gegenstände auszuschließen, die zu bestimmten vorbestimmten Klassen gehören.

11. Vorrichtung nach Anspruch 10, wobei die Gegenstandsklassen mindestens bestimmte der Klassen der Gruppe enthalten: Mobiltelefon, Minicomputer, Computer, Tastatur, Maus, Schreibtischlampe, Fernschaltersteuerung, Ohrhörer, Spielzeug, mit Ausschluss mindestens bestimmter der Klassen der Gruppe: Tastatur, Maus, Schreibtischlampe.

12. Vorrichtung nach Anspruch 10, wobei die Steuereinrichtungen in der Lage sind, die Gegenstände außerdem abhängig von einem Gegenstandsteilklasse-Parameter zu unterscheiden und für die nicht ausgeschlossenen Klassen die Gegenstände auszuschließen, die zu bestimmten vorbestimmten Teilklassen gehören.

13. Vorrichtung nach Anspruch 12, wobei die Gegenstandsteilklassen für die Klasse Computer die Teilklassen der Gruppe enthalten: Laptop, Desktop-Computer, mit Ausschluss der Teilklasse Desktop-Computer.

14. Vorrichtung nach einem der Ansprüche 1 oder 2, wobei die Sucheinrichtungen außerdem in der Lage sind, einen einem entsprechenden Gegenstand (10, 36, 46) zugeordneten inneren Zustand zu bestimmen, und die Steuereinrichtungen außerdem in der Lage sind, das Einschalten und/oder Ausschalten der Lichtquelle bedingt abhängig vom inneren Zustand zu verhindern oder auszulösen.

15. Vorrichtung nach Anspruch 14, wobei der entsprechende Gegenstand ein mobiler Gegenstand von der Art Laptop (36) ist, und der innere Zustand der Standby- oder Aktivitätszustand dieses Computers ist.

16. Vorrichtung nach Anspruch 14, wobei der entsprechende Gegenstand ein ortsgebundener Gegenstand von der Art Schreibtischlampe (10) ist, und der innere Zustand der eingeschaltete oder ausgeschaltete Zustand dieser Lampe ist.

17. Vorrichtung nach Anspruch 14, wobei der entsprechende Gegenstand ein ortsgebundener Gegenstand von der Art Fernschaltersteuerung (46) ist, und der innere Zustand der Zustand dieser Steuerung ist.

18. Vorrichtung nach Anspruch 3, wobei die Sucheinrichtungen außerdem Einrichtungen zur Messung des Empfangspegels des vom umgebenden mobilen Gegenstand gesendeten Funksignals enthalten, und die Steuereinrichtungen außerdem in der Lage sind, ein Geschwindigkeitsmerkmal der Veränderungen des Empfangspegels des Funksignals zu ermitteln, und unter den erkannten mobilen Gegenständen diejenigen auszuschließen, für die der Pegel nicht das Geschwindigkeitsmerkmal aufweist.

19. Vorrichtung nach einem der Ansprüche 1 oder 2, die außerdem Einrichtungen zur statistischen Ermittlung der Langzeit-Anwesenheits-/Abwesenheitsraten der erkannten umgebenden mobilen Gegenstände enthält, und wobei die Steuereinrichtungen außerdem in der Lage sind, dasEinschalten und/oder Ausschalten der Lichtquelle bedingt abhängig von den Ergebnissen der statistischen Ermittlung zu verhindern oder auszulösen.

20. Vorrichtung nach Anspruch 3, die außerdem Einrichtungen enthält, um:
- eine Tabelle der erfassten und durch die Sucheinrichtungen erkannten umgebenden Gegenstände zu erstellen,
- die Gegenstände dieser Tabelle unter Gegenständen mobiler Art und Gegenständen ortsgebundener Art einzuordnen und die Gegenstände ortsgebundener Art auszuschließen,
- die Ereignisse des Erscheinens oder des Verschwindens der Gegenstände mobiler Art zu erfassen, und
- das Ausschalten der Lichtquelle im Fall der Abwesenheit eines erfassten Ereignisses des Erscheinens oder Verschwindens während einer vorbestimmten Dauer auszulösen.

21. Vorrichtung nach Anspruch 20, wobei die Tabelle der umgebenden Gegenstände für jeden Gegenstand mindestens ein Gegenstandskennungsfeld und mindestens ein Chronologiefeld der Ereignisse des Erscheinens/Verschwindens dieses Gegenstands enthält.

22. Vorrichtung nach Anspruch 21, wobei das Gegenstandskennungsfeld mindestens eine Rubrik der Gruppe enthält: Adresse des Gegenstands, Kurzname, Klasse des Gegenstands, Teilklasse des Gegenstands.

23. Vorrichtung nach Anspruch 21, wobei das Chronologiefeld der Ereignisse des Erscheinens/Verschwindens mindestens eine Rubrik der Gruppe enthält: Datum des ersten Erscheinens, Datum des letzten Erscheinens, Datum des letzten Verschwindens, mittlere Anzahl des Erscheinens/Verschwindens in einem gegebenen Zeitraum, mittlere Dauer der Erscheinungen, relative Rate der Perioden des Erscheinens/Verschwindens.

24. Vorrichtung nach Anspruch 1, die außerdem Einrichtungen zur Erfassung durch einen Infrarotsensor der für die Aktivität einer Fernsteuerung eines Haushaltsgeräts repräsentativen Signalemissionen und zum Erzwingen des Ausschaltens der Lichtquelle im Fall des Aufhörens der Signalerfassungen während einer vorbestimmten Dauer enthält.

25. Vorrichtung nach Anspruch 1, die außerdem Einrichtungen zur Erfassung der Anwesenheit mindestens einer Person in der Nähe der Vorrichtung durch einen Volumen- oder Wärmedetektor und zum Erzwingen des Ausschaltens der Lichtquelle im Fall des Aufhörens der Anwesenheitserfassungen während einer vorbestimmten Dauer enthält.

26. Beleuchtungsanlage, **dadurch gekennzeichnet, dass** sie aufweist:
- eine Vielzahl von Beleuchtungsvorrichtungen nach einem der Ansprüche 1 bis 25, wobei jede Beleuchtungsvorrichtung (42) Funksende- und empfangseinrichtungen enthält, die eine drahtlose Datenaustauschverbindung mit jeder anderen Vorrichtung der Anlage suchen und aufbauen können, und
- Einrichtungen zur Netzwerk-Konfiguration der Beleuchtungsvorrichtungen untereinander und mit den umgebenden Gegenständen, die sie erfasst haben.

27. Anlage nach Anspruch 26, wobei die Netzwerk-Konfigurationseinrichtungen Einrichtungen sind, die in der Lage sind:
- für jede Vorrichtung zu suchen, welche die in der Nähe vorhandenen umgebenden Gegenstände sind, mit denen eine Schnittstellenverbindung aufgebaut werden kann, ausgehend von den Ergebnissen dieser Suche eine Tabelle der sichtbaren umgebenden Gegenstände zu erstellen, und den anderen Vorrichtungen die so erstellte Tabelle der sichtbaren Gegenstände zu übermitteln, und
- eine Netztopologie ausgehend von den verschiedenen so übermittelten Tabellen sichtbarer Gegenstände zu definieren.

28. Anlage nach Anspruch 27, wobei die Netzkonfigurationseinrichtungen außerdem in der Lage sind:
- unter den Vorrichtungen eine von ihnen als Netz-Kopfende-Vorrichtung zu bezeichnen, und
- die Topologie in einem hierarchisierten Netz ausgehend von der so bezeichneten Kopfende-Vorrichtung zu definieren.

29. Anlage nach Anspruch 26, die außerdem mindestens ein Fernschalter-Steuergerät (46) enthält, das aufweist:
- Funksender-/empfängereinrichtungen, die in der Lage sind, eine drahtlose Datenaustauschverbindung mit jeder Beleuchtungsvorrichtung (42) der Anlage zu suchen und aufzubauen,
- Einrichtungen zur Parametrierung derjenigen der Beleuchtungsvorrichtungen, die vom Gerät überwacht werden können, und
- Einrichtungen, um an jede der Beleuchtungsvorrichtungen, die überwacht werden können, nach spezifischer Einwirkung durch einen Benutzer auf das Gerät ein Zwangseinschalt- oder ausschaltsignal der Lichtquelle zu übertragen.

30. Anlage nach Anspruch 29, die außerdem Einrichtungen enthält, um ausgehend von der Topologie des Netzes einen Ausbreitungsgraph des Zwangssignals vom Fernschalter-Steuergerät zu den Beleuchtungsvorrichtungen zu definieren, die überwacht werden können, wobei diese Ausbreitung entweder direkt vom Gerät oder indirekt, nachdem das Signal weitergeleitet wurde, nach und nach von einer oder mehreren der Vorrichtungen des Netzes vorgenommen wird.

## Claims

1. A lighting device (10; 42) including:
- a radio receiver circuit (24),
- search means (20), cooperating with the radio receiver circuit to detect and identify surrounding objects (34, 36, 38, 40) present nearby the device, these surrounding objects being themselves provided with radio transmitter circuits liable to be interfaced with said radio receiver circuit, and
- control means, adapted to control a switch-off of a light source (12),
the device being **characterized in that** the switch-off control means are means adapted to cooperate with the search means (20) and include means adapted to:
. detect the appearance or the disappearance of said surrounding objects in the range of the lighting device, and
. conditionally trigger the switch-off of the light source upon detection of the disappearance of at least one surrounding object, as a function of predetermined switch-off criteria.

2. The device of claim 1, wherein the control means are also adapted to:
. conditionally control a switch-on of the light source (12) upon detection of the appearance of at least one surrounding object, as a function of predetermined switch-on criteria.

3. The device of one of claims 1 or 2, wherein the control means further comprise means adapted to:
. discriminate, among the surrounding objects detected, between objects of the nomadic type (34, 36) and objects of the sedentary type (38, 40); and
. trigger the switch-on and/or the switch-off of the light source only upon detection of the appearance or the disappearance of at least one nomadic object.

4. The device of one of claims 1 or 2, further comprising a button (30; 44) for forcing the light source to the switch-on state if the latter is off, or conversely to the switch-off state if it is on, upon a specific action of a user of the lighting device (10; 42).

5. The device of claim 3, further comprising means for storing at least one user identifier associated with a corresponding nomadic object, and wherein the control means are further adapted to exclude, from the recognized nomadic objects, those whose proper identifier does not match with at least one identifier kept in the storage means.

6. The device of claim 5, further comprising previous matching means adapted, upon a specific action of the user of a nomadic object, to store a proper user identifier associated with this nomadic object.

7. The device of claim 2, further comprising an ambient illumination level sensor (38), and means for inhibiting the switch-on of the light source as a function of the signal delivered by this illumination sensor.

8. The device of claim 7, further comprising means for transmitting a flashing of the light source, when the control means trigger the switch-on of the light source but that this triggering is inhibited as a function of the signal delivered by the illumination sensor.

9. The device of one of claims 1 or 2, further comprising means for storing the long-term variations of the ambient illumination level, and wherein the control means are further adapted to conditionally inhibit, or trigger, the switch-on and/or the switch-off of the light source, as a function of said stored variations.

10. The device of one of claims 1 or 2, wherein the control means are further adapted to discriminate the objects as a function of an object class parameter, and to exclude the objects belonging to certain predetermined classes.

11. The device of claim 10, wherein the object classes comprise at least certain of the classes of the group: portable phone, personal digital assistant, computer, keyboard, mouse, desk lamp, impulse relay control, earphone, toy, with exclusion of at least certain of the classes of the group: keyboard, mouse, desk lamp.

12. The device of claim 10, wherein the control means are adapted to further discriminate the objects as a function of an object sub-class parameter and, for the non-excluded classes, to exclude the objects belonging to certain predetermined sub-classes.

13. The device of claim 12, wherein the object sub-classes comprise, for the computer class, the sub-classes of the group: laptop computer, desktop computer, with exclusion of the sub-class: desktop computer.

14. The device of one of claims 1 or 2, wherein the search means are further adapted to determine an internal state associated with a corresponding object (10, 36, 46), and the control means are further adapted to conditionally inhibit, or trigger, the switch-on and/or the switch-off of the light source, as a function of said internal state.

15. The device of claim 14, wherein said corresponding object is a nomadic object of the laptop-computer type (36), and said internal state is the standby or activity state of this computer.

16. The device of claim 14, wherein said corresponding object is a sedentary object of the desk-lamp type (10), and said internal state is the switch-on or switch-off state of this lamp.

17. The device of claim 14, wherein said corresponding object is a sedentary object of the impulse-relay-control type (46), and said internal state is the state of this control.

18. The device of claim 3, wherein the search means further comprise means for measuring the level of receipt of the radio signal transmitted by the surrounding nomadic object, and the control means are further adapted to evaluate a character of rapidity of the variations of the radio signal receipt level and to exclude, from the recognized nomadic objects, those for which the level has not said character of rapidity.

19. The device of one of claims 1 or 2, further comprising means for the statistical evaluation of the long-term presence/absence rates of the surrounding nomadic objects recognized, and wherein the control means are further adapted to conditionally inhibit, or trigger, the switch-on and/or switch-off of the light source, as a function of the results of said statistical evaluation.

20. The device of claim 3, further comprising means for:
- establishing a table of the surrounding objects detected and identified by the search means,
- classifying the objects of this table between objects of the nomadic type and objects of the sedentary type, and excluding the objects of the sedentary type,
- detecting the events of appearance and disappearance of the objects of the nomad type, and
- triggering the switch-off of the light source in case of absence of appearance or disappearance event detected for a predetermined duration.

21. The device of claim 20, wherein said surrounding object table comprises, for each object, at least one object identifier field and at least one appearance/disappearance event chronology field for this object.

22. The device of claim 21, wherein the object identifier field comprises at least one caption of the group: address of the object, abbreviated name, class of the object, sub-class of the object.

23. The device of claim 21, wherein the appearance/disappearance event chronology field comprises at least one caption of the group:
date of first appearance, date of last appearance, date of last disappearance, average number of appearances / disappearances over a given period, average duration of the appearances, relative rate of the appearance/disappearance periods.

24. The device of claim 1, further comprising means for detecting, by an infrared sensor, signal transmissions representative of the activity of a domestic appliance remote-control, and forcing the switch-off of the light source in case of cessation of the signal detections for a predetermined duration.

25. The device of claim 1, further comprising means for detecting, by a volumetric or thermal detector, the presence of at least one person nearby the device, and forcing the switch-off of the light source in case of cessation of the presence detections for a predetermined duration.

26. A lighting installation, **characterized in that** it includes:
- a plurality of lighting devices according to one of claims 1 to 25, each lighting device (42) comprising radio transmitter and receiver means adapted to search and establish a wireless link of data exchange with any other device of the installation, and
- means for configuring the lighting devices into a network, between each other and with the surrounding objects they have detected.

27. The installation of claim 26, wherein the network configuration means are means adapted to:
- for each device, search which are the surrounding objects present nearby with which an interface link may be established, establish, based on the results of this search, a table of the visible surrounding objects, and communicate to the other devices the so-established visible object table, and
- define a network topology from the different visible object tables so communicated.

28. The installation of claim 27, wherein the network configuration means are further adapted to:
- designate, among the devices, one of them as the network head device, and
- define said topology into a hierarchized network, from the so-designated head device.

29. The installation of claim 26, further comprising at least one impulse relay control box (46) including:
- radio emitter/receiver means adapted to search and establish a wireless link of data exchange with each lighting device (42) of the installation,
- means for parameterizing those of the lighting devices that are liable to be controlled by said box, and
- means for transmitting to each of said lighting devices liable to be controlled a signal of forcing the light source to a switch-on or switch-off state, upon a specific action of a user on the box.

30. The installation of claim 29, further comprising means for defining, based on the topology of the network, a graph of diffusion of the forcing signal from the impulse relay control box to said lighting devices liable to be controlled, this diffusion being operated either directly from said box, or indirectly after that the signal has been relayed, gradually, by one or several of said devices of the network.
